# EUROPEAN PATENT APPLICATION

(11) **EP 4 603 451 A1**
(43) Date of publication of application: **20.08.2025**
(21) Application number: 24158229.5
(22) Date of filing: 16.02.2024
(51) Int. Cl.: C01B 33/152, C01B 33/154, C01B 33/157, C01B 33/158, C01B 33/159

(54) **IMPROVEMENTS IN AND RELATING TO SILICA GELS AND AEROGELS AND PROCESSES OF PREPARING THE SAME**

(71) Applicant: Thermulon Ltd, Stockton-on-Tees County Durham TS21 3FD (GB)
(72) Inventor: The designation of the inventor has not yet been filed
(74) Representative: Abel & Imray LLP

(57) **Abstract**

A process of preparing a silica gel, such as an aerogel, is disclosed. Also disclosed is a silica gel made by the process, and insulation products comprising the silica gel and optionally fibres. The process comprises gelling and silylating a silica gel precursor by combining first and second mixtures to form a third mixture. The first mixture comprises a first polar phase comprising a silica gel precursor and water. The second mixture comprises an acid and a silylating agent. The third mixture has a polar phase having a pH lower than that of the first polar phase. Optionally, the silylating agent is a siloxane, such as hexamethyldisiloxane and/or hexaethyldisiloxane. Optionally, the second mixture is a dispersion or emulsion, and optionally comprises a surfactant. Optionally, the process comprises drying the silica gel to form a silica aerogel.

## Description

### Field of the Invention

The present invention concerns a process for making a silica gel, for example a silica gel suitable for drying to form an aerogel, a silica gel, a silica aerogel and insulation products comprising silica aerogels. More particularly, but not exclusively, this invention concerns a process of preparing a silica gel comprising simultaneously gelling and silylating a silica gel precursor. Preferably, the process comprises combining a silica gel precursor, water, a silylating agent and an acid mixture to form a mixture having an acidic polar phase. The acid mixture preferably comprises at least a portion of the silylating agent, pre-activating the silylating agent prior to contact with the silica gel precursor. The invention also concerns a silica gel made by such a process, and aerogels prepared from such silica gels, such as aerogels having a thermal conductivity of from about 12 to about 20 mW/mK. The invention further concerns insulation products comprising such silica aerogels, for example silica aerogel powders, silica aerogel/fibre admixtures, insulation boards comprising silica aerogels and insulation blankets comprising silica aerogels.

### Background of the Invention

Silica aerogels are ultra-porous, lightweight materials that have good thermal insulation properties. Silica aerogels find useful application in the construction industry, particularly as thermal insulation materials. Silica aerogels also find application as fire stopping materials and for the prevention of thermal runaway propagation, such as in electric vehicle battery packs, and in home appliance thermal insulation. Silica aerogels and materials comprising silica aerogels that are fire-resistant, vapour permeable and are high-performing thermal insulators are desired.

Silica gels are continuous networks of silica (SiO₂) and are typically formed by a 'sol-gel process'. The hydrolysis and condensation reactions of the silica precursors result in the formation of siloxane bridges (Si-O-Si), which will lead to the formation of the silica nanostructured solid network. The term "sol-gel transition" refers to the transition from the liquid to the solid state. It's usually assumed that the hydrolysis and condensation reactions are complete when a sol reaches the gel point. The primary particles are produced during this event, which is followed by their aggregation into secondary particles and their eventual linking together in a three-dimensional network structure.

Alkoxysilanes are common silica gel precursors. In the initial stages of the sol-gel process the alkoxysilane is hydrolysed to form silanol groups (Si-OH). Siloxane bridges are then formed between a silanol of one molecule and a silanol or alkoxide (Si-OR) group of another molecule. As each alkoxysilane has up to four groups available to react in this way, the alkoxysilanes link together in a network to form silica nanoparticles. The nanoparticles are then linked to form a gel - the gel so formed being a solvent filled, three-dimensional network that spans the volume of the liquid in which the gel was formed. Thus, it will be understood that a gel is a non-fluid colloidal network or polymer network that is expanded throughout its volume by a liquid phase. In accordance with the `Springer Handbook of Aerogels' (published by Springer Nature Switzerland AG 2023 and edited by M. A. Aegerter, N. Leventis, M. M. Koebel, and S. A. Steiner III), and as used herein, the term `gel' includes, for example, hydrogels, alcogels, organogels, solvogels and lyogels. It will be understood that: 'hydrogels' are gels with a pore fluid primarily comprising water; 'alcogels' are gels with a pore fluid primarily comprising an alcohol; 'organogels' are gels with a pore fluid primarily comprising an organic solvent; `solvogels' are gels with a pore fluid primarily comprising an arbitrary solvent; 'lyogels' may be used as a synonym for a `solvogel'. Silica aerogels are formed by removing the solvent from, e.g., a solvogel. Thus, a silica aerogel is a class of porous lightweight material (i.e. having a density of less than 200 mg/cm³) derived from a silica gel, in which the liquid phase component has been replaced with a gas. Lightweight properties are achieved by avoidance of significant collapse of the gel structure during drying. The solvent may for example be removed by supercritical drying of such a solvogel. It is particularly desired to form low-density and high porosity silica aerogels. Thus, care is needed when removing the solvent from the solvogel to prevent collapse of the pores within the internal structure of the solvogel.

The sol-gel process using alkoxysilanes as the silica gel precursor is effective but alkoxysilanes are expensive and can be toxic and/or environmentally harmful. For those reasons, alternative methods of producing silica gels have been developed in which silica gels are prepared from water glass solutions.

Water glass is an aqueous solution of sodium (or potassium) silicate and is inexpensive and readily available. Sodium silicate exists in a number of possible stoichiometries including sodium metasilicate (Na₂SiO₃), sodium orthosilicate (Na₄SiO₄) and sodium polysilicate ((Na₂SiO₃)ₙ). It will be understood that, as used herein, a water glass solution may additionally or alternatively comprise one or more other silica precursors, for example, organosiliconate salts such as potassium methylsiliconate and/or sodium methylsiliconate. Water glass is alkaline and is unreactive in water under basic conditions. However, gelation of water glass may be triggered by neutralising a water glass solution with an acid, hydrolysing the silicate to form silanol groups which are reactive to other silicate molecules.

Although the water glass synthetic route to silica gels uses inexpensive starting materials, the drying process used to remove solvent from pores of the gel to form a silica aerogel may destroy the internal porous structure of the gel by pore collapse, shrinking or cracking. Pore collapse or cracking decreases the specific surface area of the aerogel and changes the pore structure, such as average pore size and pore-size distribution of the aerogel, which can affect the beneficial properties of aerogels such as insulation properties. It is particularly difficult to remove water from within the internal pore structure without damaging the internal pore structure because water has high surface tension. For this reason, a solvent exchange process is typically used to replace water with a lower surface tension organic solvent prior to drying, yet difficulties in preserving the pore structure of the aerogel remain.

Silica aerogels comprise unreacted silanol (Si-OH) groups on the surface of the gel. The silanol group makes silica aerogels hydrophilic, and water (for example from the air) may adsorb into the pores of the aerogel. Adsorption of water from the atmosphere can affect the thermal insulation properties of the aerogel and integrity of the aerogel over time. The presence of hydrophilic silanol groups on the surface of the gel may also affect the internal pore structure of the gel during synthesis by affecting the interaction of the gel and aqueous, polar and apolar solvents during gelation, solvent exchange and drying steps.

The hydrophobicity of silica aerogels may be increased by attaching hydrophobic groups to the surface silanols of the gel. Hydrophobic aerogels may be vapour permeable without adsorbing water, thus maintaining performance over time. Hydrophobic gels can allow drying at ambient pressure, avoiding the use of supercritical reactors.

Post-modification of silica gels to increase hydrophobicity is known, for example from US 3,015,645. Typically, silica gels are treated with a silylating agent, such as alkyl siloxanes or trimethylsilyl chloride (TMS-Cl), which reacts with surface silanol groups to increase hydrophobicity. US 7,470,725 B2 discloses a process of preparing organically modified aerogels by surface-modifying ion-exchanged hydrogels. In a first step, a hydrogel is prepared from sodium or potassium silicate and the hydrogel is ion exchanged. In a second step, the ion-exchanged hydrogel is directly treated with a silylating agent without first undergoing a solvent exchange step to remove water from the gel. WO 2008/143384 A1 discloses a method of manufacturing superhydrophobic silica-based powder from water glass. The method removes the need for ion exchange of the water glass prior to gelation by eliminating Na⁺ along with water during a solvent exchange step post-gelation. Similarly, US 8,961,919 B2 describes a process for producing hydrophobic aerogels from non ion-exchanged water glass and hexamethyldisilazane. Further processes for producing hydrophobic aerogels using hexamethyldisilazane as silylating agent are disclosed in the following documents: WO2019/076977A1; S. Zhao, et al., "Phase transfer agents facilitate the production of super insulating silica aerogel powders by simultaneous hydrophobization and solvent- and ion-exchange", Chemical Engineering Journal 381 (2020) 122421; K.J. Lee et al., "Fast synthesis of spherical silica aerogel powders by emulsion polymerization from water glass", Chemistry Select 3 (2018) 1257-1261; M. de Fátima Júlio et al., "Superhydrophobic hybrid aerogel powders from waterglass with distinctive applications", Microporous Mesoporous Mater. 199 (2014) 29-39. The high cost and non-recyclable nature of hexamethyldisilazane means its use is challenging when producing an economically viable product at scale.

US 10,351,434 B2 discloses a method of preparing spherical silica aerogel granules with uniform size. Droplets of water glass solution are first uniformly dispersed with a uniform size in a non-aqueous solvent using a surfactant to form a water glass emulsion and then treated with a neutralising agent to form a silica sol. The non-aqueous solvent does not react with the silica gel precursor and is preferably a hydrophobic non-polar organic solvent such as hexane or cyclopentane. A gelling agent is then added to produce spherical silica gel granules which may, in further steps, be surface treated to increase the hydrophobicity of the gel.

US 2018/0044188 A1 discloses organically modifying aerogels by surface modifying a pre-formed gel. Surface modification of the gel occurs by treating the gel with acid, preferably hydrochloric acid, in the presence of a silylating agent. US 10,766,779 B2 discloses a three-stage method of preparing organically modified silica gels and aerogels. In a first stage, an emulsion is prepared, the emulsion comprising a basic polar phase of water and starting materials for silicatic gels and an apolar phase of a water-immiscible precursor of an active silylating agent. In a second stage, gel formation and ageing is commenced by lowering the pH of the emulsion. Gel formation is carried out at a pH of ≥7, and most preferably at a pH of between 8 and 9, with the reaction mixture stirred while being held at 40 °C for an extended period. In a third stage, the pH of the emulsion is lowered further to simultaneously commence silylation and solvent exchange. The third, silylation stage modifies the free and accessible Si-OH groups of the silica gel that remain after gelation and ageing.

The process described in US 10,766,779 B2 enables the precursor of a silylating agent to be present in a pre-prepared emulsion also comprising the starting materials of the silicatic gels. Therefore, the silylating agent does not need to be added to the reaction mixture at a later stage, removing the need for an external sol formation step. Because the gelation and ageing step is carried out at a pH ≥ 7, the precursor of the silylating agent remains inactive during gel formation and ageing, and is activated on completion of gel formation and ageing by lowering the pH of the solution simultaneously with solvent exchange. Thus, at least two separate acid addition steps are required. The process is reported to produce aerogel powders with thermal conductivities in excess of 18-mW/mK, and challenges exist in scaling the process, including for example reaction control, avoidance of excessive concentration gradients and reactor fouling. Multi-stage processes with sequential silylation and gelation are also disclosed in the following documents: L. Huber et al., "Fast and minimal-solvent production of super insulating silica aerogel granulate", Angew. Chem. Int. Ed. 56 (2017) 4753-4756; M.M. Koebel et al., "Breakthroughs in cost-effective scalable production of super insulating, ambient-dried silica aerogel and silica-bio-polymer hybrid aerogels: from laboratory to pilot scale", J. Sol-Gel Sci. Technol. 79 (2016) 308-318; S. De Pooter et al., "Optimized synthesis of ambient pressure dried thermal insulating silica aerogel powder from non-ion exchanged water glass", J. Non-Cryst. Solids 499 (2018) 217-226; M. Firoozmandan et al., "Performance of water glass-based silica aerogel for adsorption of phenol from aqueous solution, J. Sol-Gel Sci. Technol. 79 (2016) 67-75.

The present invention seeks to mitigate one or more of the above-mentioned problems. Alternatively or additionally, the present invention seeks to provide an improved process of preparing silica gels, and for preparing silica aerogels. Advantageously, the present invention seeks to provide hydrophobic gels and aerogels and processes of preparing the same.

### Summary of the Invention

The present invention provides, according to a first aspect, a process of preparing a silica gel, the process comprising:
gelling and silylating a silica gel precursor (optionally simultaneously gelling and silylating) by combining:
   (i) a first mixture comprising a first polar phase comprising the silica gel precursor and water; and,
   (ii) a second mixture comprising an acid;
to form a third mixture comprising a dispersion or emulsion of a third polar phase and a third apolar phase, the third polar phase preferably having a pH less than the pH of the first polar phase of the first mixture;
optionally wherein at least the second mixture further comprises a silylating agent.

In embodiments, the second mixture optionally comprises a second apolar phase and the second mixture is a dispersion of an aqueous phase (the second polar phase) and the second apolar phase. Optionally, the second mixture (e.g. the second apolar phase) comprises at least a portion of the silylating agent. The first mixture may additionally comprise at least a portion of the silylating agent or the first mixture may be absent of silylating agent. It has been found to be particularly advantageous to include silylating agent in the second mixture, for example when the silylating agent is activated by acid. In this way, the silylating agent can be activated by the acid prior to addition to the first mixture. When the second mixture comprises second polar and apolar phases, it is particularly advantageous to provide the second mixture in the form of a dispersion. In particular, when the silylating agent is activated at the interface of the second polar phase and the second apolar phase, a dispersion maximises the interface area, making activated silylating agent available throughout the second mixture and also allowing control of the amount of silylating agent being formed (for example allowing maximisation of the amount and availability of active silylating agent in the second mixture to improve control of the reaction in the third mixture). When the second mixture is in the form of a dispersion comprising a silylating agent, improved reaction control and better controlled dosing of the acid may be achieved. Providing the second mixture in the form of a dispersion (or emulsion) may help to minimise concentration gradients of acid occurring in the third mixture, greatly reducing reaction hot spots and fouling. Controlled dosing of the acid may therefore allow for convenient reaction scale-up (for example from a kg/day to a tonne/day scale). The dispersion may be formed by stirring the second mixture so that the second polar phase is dispersed in the second apolar phase, the second apolar phase forming the continuous phase of the dispersion.

It will be understood that the first mixture may optionally be free from silylating agent and/or free from an apolar phase (for example, the first mixture may be a first polar phase comprising the silica precursor and water).

Optionally, at least one of the first mixture and the second mixture further comprises at least one surfactant. Optionally, the second mixture further comprises at least one surfactant, for example wherein the second mixture is an emulsion of the second polar phase and the second apolar phase stabilised by the at least one surfactant. Optionally, the first mixture further comprises at least one surfactant and the first mixture is an emulsion of the first polar phase and the first apolar phase stabilised by the at least one surfactant. Optionally, for example when at least one of the first mixture and the second mixture comprises at least one surfactant, the third mixture is an emulsion of the third polar phase and the third apolar phase stabilised by a surfactant. Optionally, the first, second and/or third mixtures comprise no more than 1.5 wt% surfactant, for example no more than 1 wt% surfactant, based on the weight of the mixture (e.g. the first, second and/or third mixtures comprise no more than 1.5 wt%, such as no more than 1 wt%, surfactant, based on the weight of the mixture). Optionally, at least one of the first and second mixtures (optionally at least the second mixture, for example both the first and second mixtures) comprises about 0.0005 wt% to about 1.5 wt%, such as about 0.001 wt% to about 1 wt%, surfactant, based on the weight of the mixture. Additionally or alternatively, about 0.0005 wt% to about 1.5 wt%, such as about 0.001 wt% to about 1 wt%, surfactant is added to the third mixture and/or the third mixture comprises about 0.0005 wt% to about 1.5 wt%, such as about 0.001 wt% to about 1 wt%, surfactant. It has been found that the presence of a surfactant in the third mixture can help to improve (i.e. reduce) thermal conductivity of silica aerogels produced from the resulting silica gel. Without wishing to be bound by theory, it is believed that the use of even a (surprisingly) small wt% of surfactant, especially in combination with a disiloxane silylating agent and water glass, can create more stable droplets, increasing the interfacial area and improving the reactivity with activated silylating agent and the aforementioned benefits this affords in reaction control and speed. Additionally or alternatively, at least one of the first and/or second mixture is optionally free from surfactant. For example: surfactant is present in only one of the first and second mixtures, or surfactant is absent from both the first and second mixtures.

The first mixture of the process optionally comprises a dispersion or emulsion of a first polar phase and a first apolar phase. Additionally or alternatively, the second mixture of the process optionally comprises a dispersion or emulsion of a second polar phase and a second apolar phase. It will be understood that herein a "dispersion or emulsion" refers to a mixture of two or more immiscible phases, in which one phase is distributed within another, continuous phase. The continuous phase may be referred to as the 'bulk' phase. It will be understood that a dispersion is a finely divided mixture of two normally immiscible liquids, for example without visible separation. An emulsion is a stable dispersion, meaning that the mixture can be stored for an extended period (e.g. for at least 24 hours) without visible phase separation. Thus, as used herein, the term 'dispersion' encompasses both dispersions and emulsions, unless otherwise indicated. Phase separation of a dispersion may be prevented, for example, by continuous agitation (e.g. stirring). It will be appreciated that a dispersion may be stabilised to form an emulsion by addition of a surfactant, for example. Optionally, the first mixture may be a dispersion of the first apolar phase in the first polar phase. Preferably, the first mixture is a dispersion of the first polar phase in the first apolar phase. It will be understood that where a dispersion is described as a dispersion of a first phase in another, second phase, the second phase in which the first phase is being dispersed is the continuous bulk phase. For example, when the first mixture is a dispersion of the first polar phase in the first apolar phase, the first apolar phase forms the continuous phase. Optionally, in each mixture and when there is both a polar phase and an apolar phase, the polar phase is dispersed in the apolar phase. It will be appreciated that when the third polar phase is dispersed in the third apolar phase, particles of silica gel form in discrete acidic polar phase droplets. Without wishing to be bound by theory, it is believed that controlling, such as reducing, the size of acidic polar phase droplets by effective dispersion can help to improve reaction and product control through consistent acid dosing in the polar phase droplets. It will be understood that average droplet size is typically lower for an emulsion as compared to a dispersion.

The first mixture comprises a silica gel precursor. It will be understood that a silica gel precursor provides the units or monomers from which a silica gel is formed. For example, the silica gel precursor may be a starting material for [SiO_{4/2}] units. Optionally, the silica gel precursor is polar, and is thus present in the first polar phase of the first mixture. Optionally, the silica gel precursor is basic and thus the pH of the first polar phase is > 7, such as >10, for example the first polar phase may have a pH of 8-14, such as 10-12. Examples of basic silica gel precursors are alkali silicates. Optionally, the silica gel precursor does not substantially hydrolyse under basic conditions. It will be understood that the hydrolysis of silica gel precursors is an equilibrium and that when the silica gel precursor does not substantially hydrolyse under basic conditions the position of equilibrium lies towards the unhydrolysed silica gel precursor. Alkali silicates, such as sodium silicate, do not substantially hydrolyse under such basic conditions, and so acidic conditions or at least a reduction in basicity is required to initiate gelation. Thus, when the silica gel precursor does not substantially hydrolyse under basic conditions, gelation is not initiated until the pH of the first mixture is lowered by the combination of the first mixture (comprising silica gel precursor) and second mixture (comprising acid) to form the third mixture.

Preferably, the first polar phase comprises water and the silica gel precursor is water soluble. Optionally, the first polar phase is an aqueous phase, although other polar solvents may additionally be present in the first polar phase. If solvents other than water are present in the polar phase, then the first polar phase preferably comprises > 50% by volume of water. As used herein, a polar phase is an aqueous phase when the polar phase comprises >80% by volume water and/or when the polar solvent of the polar phase is water. The first mixture comprises the silica gel precursor as monomer units i.e. gelation of the precursor has not taken place.

The first mixture may be formed immediately prior to combining the first and second mixtures so that no substantial gelation of the silica gel precursor has occurred when the first and second mixtures are combined. For example, the first mixture may contain no more than 5 wt% gel, preferably no more than 1 wt% gel, more preferably no more than 0.1 wt% gel, based on the weight of the first mixture. When using silica gel precursors which are activated in water at acidic or basic pH, such as alkoxysilanes, it may be particularly advantageous to form the first mixture immediately prior to combining the first and second mixture to limit gelation in the first mixture. It will be understood that when the silica gel precursor is activated in water at acidic or basic pH, then the rate of hydrolysis reaction (and thus gelation) can nevertheless be increased by using an acid catalyst.

The second mixture comprises an acid. Optionally, the second mixture comprises water. Optionally, the acid is an organic acid or an inorganic acid, preferably an inorganic acid (such as an aqueous acid). The second polar phase may have, for example, a pH <4, such as a pH ≤2, for example a pH ≤1.8 (e.g. when the second mixture comprises water). The pH of the second polar phase may be ≤ 1.5 or preferably ≤ 1. It will be understood that the pH of the first polar phase of the first mixture is higher (less acidic) than the pH of the polar second phase (e.g. aqueous phase) of the second mixture. The first and second mixtures are combined in a ratio such that the pH of the resulting third polar phase of the third mixture is less than the pH of the first polar phase of the first mixture. Preferably, the pH of the third polar phase is ≤4, for example ≤3, optionally ≤2. It will be understood that the third polar phase of the third mixture comprises water originating from the first polar phase of the first mixture.

Optionally, the first and second mixtures are combined over a period of no more than about 60 minutes, preferably no more than about 45 minutes, for example no more than about 30 minutes. It will be understood that such a combination of the first and second mixtures commences gelation and silylation. Optionally, the second mixture is substantially continuously, or continuously added to the first mixture with one or more interruptions of less than 15 minutes, for example no more than 10 minutes. Alternatively, it may be that the second mixture is substantially continuously, or continuously, added to the first mixture. It will be understood that a mixture is added substantially continuously when addition of the second mixture is interrupted by no more than 5 minutes, for example no more than 1 minute, during the step of combining the first and second mixtures, while addition is continuous when there is no interruption. An 'interruption' is a period in which no second mixture is added to the first mixture. It will be further understood that rate of addition may vary, or may remain substantially constant during periods of continuous addition. Such approaches allow pH of the reaction mixture to be lowered rapidly, thus simultaneously initiating gelation and silylation.

According to the present invention, at least one of the first mixture (comprising silica gel precursor) and second mixture (comprising acid) preferably comprises a silylating agent. A silylating agent is a reagent that replaces a reactive hydrogen (for example the reactive hydrogen of an alcohol, carboxylic acid, amine, amide, and sulfide) with a silyl group (-SiRR'R"). A silylating agent can be used to introduce functionality to a silica gel by replacing surface silanol groups (Si-OH) with a silyl group. Therefore, the silylating agent is a silylating agent for silanol groups. The silylating agent may be referred to as a surface modifying agent. As discussed herein, the silylating agent is preferably hydrophobic and thus functionalises the gel with hydrophobic groups by reacting with surface silanol groups. The silylating reagent may be referred to as a hydrophobising agent. The silylation reaction is initiated at acidic pH. As discussed herein, the pH at which gelation can be initiated is typically less acidic, or more basic, than the pH at which silylation occurs. If, for example, the first and second mixtures are combined to form a third mixture having a polar phase pH of 4 or less, gelation and silylation of the silica gel precursor occur simultaneously. Without wishing to be bound by theory, it is thought that simultaneous gelation and silylation results in silylating agent being able to access silanol groups within the entire range of pores as the gel forms, and thus even small pores may be functionalised, whereas usually smaller pores are inaccessible to future or separate silylation steps. This is in contrast to a process in which silylation occurs after gelation and in which it is harder for silylating agent to access internal pores (resulting in silylation being limited to the surfaces of large/easily accessible pores and the external surface of the nanoparticles under industrially applicable processing times and conditions). Furthermore, it is thought that due to the increased presence and availability of acid in the apolar phase of the second mixture, an increased amount of silylating agent is activated, thus resulting in a shorter hydrophobisation time compared to other processes, while still allowing stable pH control in the silica gel.

As used herein the term 'pore' encompasses micropores, mesopores and macropores. It will be understood that a micropore is a pore having a diameter <2 nm, a mesopore is a pore having a diameter of 2-50 nm, and a macropore is a pore having a diameter >50 nm. `Small pores' include micropores and mesopores, especially smaller mesopores. It will be understood that `pore width' and `pore diameter' are used interchangeably.

It will be understood that the silylating agent may itself require activation, for example by hydrolysis and/or by being subjected to acidic conditions, in order to be able to react with the silanol groups of the silica gel. For example, the silylating agent may be inactive when present in the first mixture (and thus unable to react with the silica gel precursor prior to combination with the second mixture) but the silylating agent may become activated once the second mixture (comprising acid) is combined with the first mixture (comprising silica gel precursor). Optionally, when the silylating agent is present in the second mixture (comprising acid), the silylating agent may be pre-activated by the acid, i.e. before combination with the first mixture.

Optionally, the silylating agent is apolar. Optionally, the silylating agent is hydrophobic. The silylating agent may comprise the silyl group -SiRR'R" wherein at least one of R, R' and R" are an organic group comprising at least one Si-C bond. Preferably, at least one of R, R' and R" is a saturated or unsaturated alkyl, preferably a C1-C4 saturated alkyl, most preferably a C1-C2 saturated alkyl (e.g. CH₃ or CH₂CH₃); optionally, at least one of R, R' and R" is a fluoro-substituted unsaturated alkyl, preferably a C1-C4 fluoro-substituted saturated alkyl, such as a C1-C2 fluoro-substituted saturated alkyl. R, R' and R" may be identical or different to one another.

It will be appreciated that an apolar silylating agent is not miscible with an aqueous phase. When the silylating agent is apolar and is present in the first mixture, a first apolar phase comprises the silylating agent, while a first polar phase comprises the silica gel precursor and water. Additionally or alternatively, when the silylating agent is apolar and is present in the second mixture, and the second mixture comprises water (e.g. an aqueous acid), the second mixture comprises a second apolar phase comprising the silylating agent and a second aqueous phase (e.g. comprising aqueous acid).

Advantageously, the silylating agent is apolar and is activated by an acid so that the silylating agent is reactive with a silanol group. Optionally, the silylating agent is activated by an acid at a pH of < 7, optionally at a pH of < 4, optionally at a pH of ≤ 2. When the silylating agent is apolar and is activated by an acid in the presence of a polar phase (e.g. an aqueous phase), the silylating agent interacts with the acid at the interface of the apolar and polar phases. This means that active silylating agent is dispersed in droplets throughout the mixture, allowing for particularly effective simultaneous silylation and gelation. It is thought that this allows the gelation and silylation reaction to be more reliably controlled. It will be understood that by activating the silylating agent it is meant that the silylating agent is activated from an unreactive silylating agent to a silylating agent that is reactive with a silanol (Si-OH) group. The reactive species from the activated silylating agent may react with a surface silanol group of the gel being formed in the inventive process. It will be understood that under acidic conditions, at least a portion of gel silanol groups may be protonated, e.g. to form Si-OH₂⁺. Prior to activation, the silylating agent is unreactive with a silanol group or only reacts very slowly.

In embodiments, the silylating agent optionally comprises at least one of a siloxane, a silazane, an alkoxysilane, a silylhalide or mixtures thereof. In embodiments, the silylating agent optionally comprises siloxane, preferably a disiloxane. Optionally, the siloxane comprises a monosiloxane of the formula R^{a}R^{a}'R^{a}" Si-OH, wherein at least one of R^{a}, R^{a}' and R^{a}" are a saturated or unsaturated alkyl. Preferably, each of R^{a}, R^{a}' and R^{a}" are a C1-C6 saturated alkyl. It will be understood that each of R^{a}, R^{a}' and R^{a}" may be identical or each of R^{a}, R^{a}' and R^{a}" may be different. Examples of suitable silanol silylating agents include trimethylsilanol (TMS-OH), triethylsilanol (TES-OH), and derivatives thereof, preferably TMS-OH. Preferably, the disiloxane comprises a disiloxane of the formula R^{a}R^{a}'R^{a}" Si-O-SiR^{b}R^{b}'R^{b}", wherein at least one of R^{a}, R^{b}, R^{a}', R^{b}', R^{a}" and R^{b}" are a saturated or unsaturated alkyl. Preferably, each of R^{a}, R^{b}, R^{a}', R^{b}', R^{a}" and R^{b}" are a C1-C6 saturated alkyl. It will be understood that each of R^{a}, R^{b}, R^{a}', R^{b}', R^{a}" and R^{b}" may be identical or each of R^{a}, R^{b}, R^{a}', R^{b}', R^{a}" and R^{b}" may be different. Optionally, R^{a}R^{a}'R^{a}"Si-O-SiR^{b}R^{b}'R^{b}" is symmetrical such that R^{a} is equal to R^{b}, R^{a}'is equal to R^{b}', and R^{a}" is equal to R^{b}". Examples of suitable disiloxane silylating agents include hexamethyldisiloxane (HMDSO), hexaethyldisiloxane (HEDSO), hexapropyldisiloxane (HPDSO) and derivatives thereof. Such examples further include non-symmetrical derivatives of disiloxanes which can form during the reaction and be collected from recycled solvents, e.g. isopropoxytrimethylsilane. Hexamethyldisiloxane is a particularly preferred silylating agent. Examples of suitable silazanes are hexamethyldisilazane (HMDZ) and derivatives thereof. Examples of silylhalides are trimethylchlorosilane (TMCS) and triethylchlorosilane (TECS). As used herein, the term alkoxysilane includes salts (e.g. alkali metal salts) of alkoxysilanes. Suitable alkoxysilanes include potassium methylsiliconate, sodium methylsiliconate, methyltrimethoxysilane (MTMS) and methyltriethoxysilane (MTES). Siloxanes and silazanes undergo acid decomposition to form an activated silylating agent. Siloxanes are especially advantageous because they often exist in equilibrium with the corresponding activated silylating agent (silanol), with silanol formation being favoured by addition of an acid. That is especially the case for HMDSO and HEDSO, in which the relatively small alkyl substituents do not inhibit hydrolysis of Si-O bonds. For example, HMDSO hydrolyses under acidic conditions to form active compound trimethylsilanol (TMS-OH). Hexamethyldisiloxane is the condensation product of trimethylsilylating agents and is a poor silylating agent prior to activation. Under acidic, aqueous conditions, hexamethyldisiloxane is converted into two trimethylsilanol molecules (TMS-OH). Trimethylsilanol is able to react with a silanol group and thus silylate surface Si-OH groups of a silica gel. Under acidic conditions and in the presence of an aqueous phase, an equilibrium exists between HMDSO, TMS-OH and protonated transient species of the silane, such as the alcohol TMS-OH₂⁺. This is important from both a reactivity and recyclability perspective. It is believed that this equilibrium hydrolysis/condensation of HMDSO allows for control of reactivity (since the position of the equilibrium allows for control of the availability of active silylating agent) and convenient recycling (since activation of the silylating agent is not irreversible, allowing unused HMDSO to be recovered). HEDSO behaves similarly to HMDSO. Optionally, the silylating agent comprises recycled HMDSO and/or HEDSO separated from a silica gel mixture, optionally wherein the silica gel mixture comprises a silica gel prepared by the process of the present invention. Optionally, the silica gel mixture comprises silica gel and HMDSO and/or HEDSO, and optionally apolar solvent and/or phase transfer agent (e.g. as described herein). Optionally, the process comprises obtaining recycled HMDSO and/or HEDSO separated from such a silica gel mixture to form at least a portion of the second apolar phase of the second mixture (and/or at least a portion of the first apolar phase of the first mixture, if present). Additionally, or alternatively, the process optionally comprises recycling HMDSO and/or HEDSO separated from a silica gel mixture and: (i) using at least a portion of the recycled HMDSO and/or HEDSO to form at least a portion of the second mixture, and/or (ii) mixing at least a portion of the recycled HMDSO and/or HEDSO with silica precursor and water to form at least a portion of the first mixture, optionally wherein the silica gel mixture comprises a silica gel prepared according to the present invention.

In embodiments, the silylating agent optionally does not comprise silazanes, and in particular the silylating agent does not comprise HMDZ. Although silazanes such as HMDZ can be efficient silylating agents, HMDZ produces ammonia as a byproduct of the silylation reaction which must be treated downstream, increasing costs. Furthermore, silazane activation is not a reversible reaction, and so unused, activated HMDZ cannot be recycled back to HMDZ for re-use in the process. Yet further, HMDZ is typically required to be used in excess, exacerbating wastage and cost. HMDZ is also an expensive silylating agent and there reduces the economic viability of a scaled up process. In embodiments, the silylating agent optionally does not comprise silylhalides, in particular chlorosilyls such as trimethylchlorosilane (TMCS). While TMCS is a highly reactive silylating agent, its use typically increases process costs and results in production of HCl as a by-product (which must be removed and/or requires use of specialist equipment, e.g. ceramic lined reactors).

Optionally, the process comprises simultaneously gelling and silylating the silica gel precursor. Optionally, the pH of the third polar phase of the third mixture is ≤ 4. Optionally, gelation of the silica gel precursor and silylation of the gel occur simultaneously by acidification of a mixture comprising both a silylating agent and the silica gel precursor. It has surprisingly been found that the resulting gels may be processed into silica aerogels with low thermal conductivity (thus excellent insulation properties), the resulting silica aerogels having a thermal conductivity lower than achieved with similar manufacturing processes. It is thought that the thermal conductivity properties of the aerogels are at least in part attributable to the hydrophobicity of the gel formed during simultaneous gelation and silylation of the inventive process. Without wishing to be bound by theory, it is thought that simultaneous gelation and silylation allows the silylating agent to react with the Si-OH groups of the gel as the gel is forming. Thus, interior surfaces of pores which would otherwise be hard to access and/or effectively inaccessible to the silylating agent post-gel formation, are partially hydrophobised during simultaneous gelling and silylating. A consequence of pore silylation is believed to be reduced shrinkage and/or collapse of pores during drying, resulting in better thermal performance of the resulting aerogel. Furthermore, simultaneous gelling and silylation helps to reduce overall process reaction time, allowing for faster throughput and higher process efficiency. For example, increased interior silylation is believed to allow for faster solvent exchange/phase transfer prior to drying, during which water is replaced as the primary pore liquid with another solvent (e.g. alcohol). In particular, it is believed that internal pore silylation may facilitate faster and more effective progression of the solvent front through the gel during phase transfer. Yet further, internal pore silylation is believed to result in a gel with an improved hydrophobicity of the internal structure of the aerogel, itself resulting in more rapid and effective solvent exchange, preventing any residual aqueous phase from becoming entrained in the network, and thus preventing cracking, shrinkage or pore collapse during drying. The resulting aerogels have low thermal conductivity, which is thought to be at least in part attributable to the uniformity of size of the internal pores and the density of the aerogel. Additionally, the hydrophobicity of the gel reduces water adsorption from the atmosphere by the aerogel, thereby helping to maintain a low thermal conductivity over time. In particular, it is believed that gel hydrophobicity helps to avoid cycles of atmospheric water adsorption. It has been surprisingly found that this effect from simultaneous gelation and silylation is particularly pronounced and effective when the silylating agent is pre-activated in a dispersion as previously discussed.

A process according to the present invention, especially when comprising simultaneous gelling and silylation, allows for more efficient, rapid, and cost-effective silica aerogel production as compared to existing processes, such as that mentioned in US 10,766,779 B2 (in which gelation and silylation processes are carried out in separate stages). As will be illustrated by the present examples, the entire process from initiation of gelation and silylation through to obtaining a dried aerogel product may be less than 5 hours, including drying.

The silica gel comprises [SiO_{4/2}] units and the silica gel precursor comprises a starting material for the repeating units [SiO_{4/2}] of the silica gel. Additionally, the silica gel may comprise [RₓSiO_{(4-x)/2}] units wherein x=1 or 2, in which case the silica gel precursor may comprise starting material for the [RₓSiO_{(4-x)/2}] units. R may be selected from any one of: hydrogen, linear alkyl, branched alkyl, cyclic alkyl, aromatic, heteroaromatic or alkylene group. R may be substituted or unsubstituted. Each of R may be identical, or may be different. It is particularly preferred if at least one R group is an organic group meaning that at least one Si-C bond is present, preferably a hydrophobic organic group, most preferably a C1-C6 saturated or unsaturated alkyl, and in particular methyl, ethyl or propyl.

Optionally, the silica gel precursor comprises a silicate or alkoxysilane, or mixtures thereof. It will be understood that a silicate has the general formula [SiO₄₋ₓ]ₙ^{(4-2x)-} wherein 0 ≤ x < 2, and includes orthosilicate (SiO ₄⁴⁻) (x = 0, n = 1) and metasilicate SiO₃²⁻ (x = 1, n =1) and pyrosilicate Si₂O₇⁶⁻ (x = 0.5, n =2). It will be understood that an alkoxysilane has the general formula [Si(OR)ₓO₍₄₋ₓ₎]^{(4-x)-} units wherein x = 1-4 and OR is an alkoxy group. One or more counterions may be present, for example sodium, potassium, calcium, aluminium, gallium, indium or zinc counterions. Thus, the silicate may be in the form of a metal silicate.

Optionally, the silica gel precursor is derived from waste glass or other recyclable glass and/or silica sources. Optionally, the silica gel precursor is derived from one or more clays, such as aluminosilicate clays.

Optionally, when the silica gel precursor comprises a silicate, the silicate is an alkali metal silicate. Optionally, the silica gel precursor comprises sodium silicate and/or potassium silicate. Preferably, the sodium silicate and potassium silicate are present in solution in the water-containing polar phase (e.g. aqueous phase) of the first mixture. Sodium silicate and potassium silicate in water are commonly referred to as water glass. Sodium silicate contains a mixture of sodium oxide (Na₂O) and silica (SiO₂) and is water soluble. Potassium silicate is similar with the sodium ions being replaced by potassium ions. Thus, in embodiments, the first polar phase of the first mixture optionally comprises sodium silicate and/or potassium silicate (as the silica gel precursor) and water. In embodiments, a first polar phase comprising water glass and water is optionally prepared prior to being added to a first apolar phase, thus forming the first mixture.

The silylating is present in the second mixture, and optionally in the first mixture. In embodiments, the silylating agent is optionally apolar and serves as the principal solvent of the optional first apolar phase and/or the principal solvent of the optional second apolar phase. By "principal" solvent, it is meant that the solvent comprises greater than 50 % by volume of the apolar phase. When the silylating agent is a disiloxane, particularly HMDSO or HEDSO, it is particularly preferred that the silylating agent is the principal apolar solvent in at least one of the first and second mixture. It is particularly advantageous that HMDSO or HEDSO is the principal apolar solvent in one or more of the first mixture and second mixture. An advantage of using HMDSO or HEDSO as principal apolar solvent is that it can be readily recovered (for example, by evaporation or distillation) at the end of the process, and optionally re-used as principal apolar solvent in the process. Activated HMDSO, in the form of TMS-OH, can condense to reform HMDSO. Addition or removal of acid can shift the HMDSO/TMS-OH equilibrium, which can be useful for recovery and re-use of HMDSO/TMS-OH in subsequent reactions. Similarly, TES-OH can condense to reform HEDSO for recovery. It has been found that recovered HMDSO/TMS-OH may be used without further treatment (apart from optional purification) as the principal solvent in a second cycle of the process without significant loss in activity or deterioration of product properties or performance. Thus, utilising HMDSO or HEDSO as the principal apolar solvent in one or more of the first and second mixture improves the efficiency and lowers the cost of the process. Yet further, the equilibrium between HMDSO/HEDSO and their respective active forms (TMS-OH/TES-OH) allows for continuous activation during the gelling and silylating step as HMDSO/HEDSO reacts at the interface of the acid emulsion droplets (e.g. in the second mixture). Without wishing to be bound by theory, when the second mixture comprises silylating agent in a dispersion or emulsion, it is believed that the active transient silylating species (e.g. TMS-OH₂⁺) may be present in the polar phase of the second mixture droplets at the point of mixing to form the third mixture, which results in the simultaneous gelation and silylation in the third mixture. Similarly, in the case that the second mixture does not comprise silylating agent, and the first mixture comprises silylating agent in a dispersion or emulsion, it is believed that the dispersed silylating agent is activated to form the transient active species throughout the mixture, thereby resulting in simultaneous gelation and silylation.

It is believed that the ready activation of siloxanes to form the corresponding silanol in the presence of an acid allows for particularly effective hydrophobisation in smaller pores during gelation, especially in the case of HMDSO and HEDSO. Furthermore, the relatively low carbon content of HMDSO and HEDSO (compared to, for example, HPDSO and higher alkyl siloxanes) helps to maintain a relatively low level of carbon in the hydrophobised gel, which is especially useful when the gel is used to form aerogels for insulation where high fire resistance is desired. Improved internal pore hydrophobisation is believed to also facilitate better progression of the solvent front through the gel during phase transfer, reducing overall process time. The siloxane/silanol equilibrium also facilitates convenient pre-activation of the silylating agent when silylating agent is included in the second mixture (comprising acid).

Optionally the second apolar phase, and if present the first apolar phase, comprises at least one apolar solvent selected from toluene, benzene, octane, heptane, hexane, paraffin, HMDSO, HMDZ, TMCS and derivatives or mixtures thereof. Preferably, the second apolar phase, and if present the first apolar phase, comprises hexamethyldisiloxane (HMDSO) and/or hexaethyldisiloxane (HEDSO). HMDSO and HEDSO are apolar and liquid at room temperature, and thus are immiscible with the aqueous acid solution, and solvate other apolar components of the reaction mixtures. HMDSO and HEDSO are also silylating agents. Thus, HMDSO/HEDSO may act as the principal solvent in at least one of the first and second mixture, solubilising other apolar components, and also act as a silylating agent. Optionally, HMDSO is the silylating agent, the principal apolar solvent of the second mixture, and if present the principal apolar solvent of the first mixture.

Optionally, when the first mixture comprises a first apolar phase and a first polar phase, the ratio of first apolar phase to first polar phase in the first mixture is from 0.5:1 to 5:1, for example from 1.5:1 to 3:1. Additionally or alternatively, the first apolar phase of the first mixture, when present, optionally comprises at least 20 vol% silylating agent (e.g. HMDSO and/or HEDSO, preferably HMDSO), based on the volume of the first apolar phase. Optionally, the first apolar phase, when present, comprises at least 50 vol%, for example at least 75 vol%, such as about 100 vol% silylating agent (e.g. HMDSO and/or HEDSO, preferably HMDSO), based on the volume of the first apolar phase. Optionally, the first apolar phase, when present, comprises at least 98 vol% HMDSO and/or HEDSO, for example the first apolar phase substantially consists of, or consists of, HMDSO and/or HEDSO. Optionally, when the second mixture comprises a second apolar phase and a second polar phase, the ratio of second apolar phase to second polar phase is from 0.5:1 to 2:1, for example about 1:1. Additionally or alternatively, the second apolar phase of the second mixture, when present, comprises at least 20 vol% silylating agent (e.g. HMDSO and/or HEDSO, preferably HMDSO), based on the volume of the second apolar phase. Optionally, the second apolar phase, when present, comprises at least 50 vol%, such as about 100 vol% silylating agent (e.g. HMDSO and/or HEDSO, preferably HMDSO), based on the volume of the second apolar phase. Optionally, the second apolar phase, when present, comprises at least 98 vol% HMDSO and/or HEDSO, for example the second apolar phase substantially consists of, or consists of, HMDSO and/or HEDSO. Optionally, the first mixture comprises at least 30 vol%, such as at least 75 vol% silylating agent (e.g. HMDSO and/or HEDSO), based on the volume of the first mixture. Optionally, the second mixture comprises at least 25 vol%, such as at least 50 vol% silylating agent (e.g. HMDSO and/or HEDSO), based on the volume of the second mixture.

The process of the invention comprises initiating gelation and silylation of a silica gel precursor. Optionally, gelation and silylation reactions occur simultaneously. By "simultaneously" it is meant that at least a portion of the formed gel undergoes silylation at the same time as at least some of silica gel precursor is gelled. Because gelation is typically triggered at a higher pH (less acidic conditions) than silylation, it may be that as the first and second mixtures are combined, gelation is triggered prior to significant silylation. Silylation may occur as the pH is lowered further during the combining of the first and second mixtures. Optionally, the first and second mixtures are combined over a period of time sufficient to allow substantially simultaneous gelation and silylation. That is, the pH of the first mixture is lowered by the second mixture quickly enough that at least some silylation occurs at the same time as at least some a portion of the silica gel precursor undergoes gelation. Optionally, the first and second mixture are combined continuously, that is one of the first and second mixtures are added to the other mixture continuously. Optionally, the second mixture is added to the first mixture so that the pH of the first mixture is decreased (made more acidic) to a pH where initiation of gelation of the silica gel precursor and silylation of the forming gel by the silylating agent both occur. Optionally, the pH of the second mixture (e.g. the pH of the second polar phase, if present) is low enough to activate the silylating agent in the second mixture (if present) prior to combination with the first mixture. It will be understood that once the pH of the first mixture has decreased to a pH sufficient that gelation and silylation occur, then at least a portion of the third mixture has been formed. Additionally or alternatively, the third mixture may be understood to have been formed when, for example, the polar phase of the combined mixtures has a pH ≤4, such as ≤ 3, for example ≤ 2. Thus, it will be understood that further portions of the first/second mixture may be added to the third mixture to complete the step of combining the first and second mixtures. The first and second mixture may be combined in any particular order, and may be combined by combining multiple aliquots of each mixture, and in any order, until the third mixture is formed. It has advantageously been found that if the second mixture containing the aqueous acid solution is added to the first mixture containing the silica gel precursor, then the silylation and gelation reactions can be more conveniently controlled. Furthermore, by adding the second, acidic, mixture to the first, basic mixture, the pH of the polar phase of the first mixture can be lowered in a controlled manner to the desired pH of the polar phase of the third mixture. On the other hand, if the first (basic) mixture is added to the second (acidic) mixture, this may result in an increase in pH of the polar phase of the second mixture towards basic in at least localised regions. Thus, adding the second mixture to the first mixture helps to avoid unwanted pH fluctuations. Adding the second mixture to the first mixture may be particularly advantageous for scaling up the reaction to a large-scale process. Thus, in embodiments, combining the first mixture and the second mixture optionally comprises adding the second mixture to the first mixture. Optionally, the second mixture is added to the first mixture to lower the pH of the first polar phase of the first mixture, thus forming the third mixture.

Optionally, the third mixture is formed within 30 minutes, for example within 15 minutes of commencing the step of combining the first and second mixtures, the third mixture having a third polar phase with a pH ≤ 4, such as ≤3, for example ≤ 2. Optionally, the third mixture is formed within the first 80%, for example the first 70% of the duration of the step of combining the first and second mixtures, preferably wherein the third mixture has a third polar phase with a pH ≤4, such as ≤3, for example ≤2. For example, if the total time taken to combine the first and second mixtures is 40 minutes, the third mixture having a pH of ≤4 is formed within the first 80% of the duration of the step of combining the first and second mixtures provided that a pH of ≤4 is reached no more than 32 minutes after commencing combination of the first and second mixtures. It will be understood that pH at various stages of an addition process may be calculated, for example, using titration curves, e.g. according to techniques known to the skilled person. Thus, the pH of the third mixture may be adjusted, for example, by controlling pH of the second mixture and/or the rate at which the first and second mixtures are combined. Optionally, the second mixture is added to the first mixture over a period of no more than 60 minutes, preferably no more than 45 minutes, optionally no more than 30 minutes. The period during which the second mixture is added to the first mixture may also be referred to as the gelation period (it will be understood that silylation also occurs during the gelation period). The gelation period commences when addition of the second mixture commences, and finishes when addition of the second mixture is complete. Thus, the third mixture may be formed during the gelation period. Optionally, the gelation period has a duration of from 5 seconds to 60 minutes, preferably from 5 minutes to 45 minutes, optionally from 10 minutes to 30 minutes. Optionally, the first mixture and added portion of second mixture is maintained at a temperature of between 0 °C and 100 °C, most preferably at a temperature of between 20 °C and 70 °C, throughout the gelation period. Following the gelation period, the third mixture may also comprise, or be referred to as, silica gel slurry.

Optionally, the acid comprises an inorganic acid. Optionally, the inorganic acid is a mineral acid. Mineral acids include nitric acid, sulfuric acid, phosphoric acid and hydrochloric acid. Most preferably the acid is nitric acid. Optionally, the acid is not hydrochloric acid. Hydrochloric acid can corrode the reactor in which the process is taking place and can also result in the production of chlorine gas. It is particularly preferred to use a combination of nitric acid with HEDSO and/or HMDSO because side products such as HCl, Cl₂ and ammonia are not produced by their reaction.

Following the gelation period, the process may optionally comprise an ageing period during which silica gel of the third mixture is aged. It will be understood that "ageing" is a well-known step in the preparation of silica gels and requires leaving the gel in solvent for a period of time to achieve a gel with stable properties - see, for example, Springer Handbook of Aerogels, and Scherer, G. W.: "Aging and drying of gels", J. Non-Cryst. Solids, 100, 77-92 (1988). Ageing can be attributed to two main mechanisms, syneresis, i.e. contraction of gel network due to the increase of connectivity and resultant expulsion of pore fluid, and coarsening, or Ostwald ripening, in which the dissolution/reprecipitation of silica can occur. The associated kinetics depends on the pH and the nature of the solvent. Generally, the particles "neck" area, the average pore size and the apparent density of the gel increase through ageing treatments. It will be understood that such an ageing period, if present, may optionally commence once the gelation period finishes, and/or finish at commencement of a further treatment step, such as a phase transfer step (as described hereinbelow). Optionally, the ageing period is between 1 minute and 240 minutes, preferably between 30 minutes and 180 minutes, such as between 60 minutes and 140 minutes. Optionally, the third mixture (silica gel slurry) is maintained at a temperature of between 0 °C and 100 °C, most preferably at a temperature of between 35 °C and 70 °C during the ageing period.

Optionally, the process comprises contacting the gel slurry with fibres (such as coated and/or uncoated fibres), for example before ageing the slurry. Optionally, such fibres are present in at least one of the first mixture and/or the second mixture (preferably the first mixture). Additionally or alternatively, such fibres are added to the third mixture at any point, for example before or during the ageing period (optionally before), if the process comprises an ageing period. Preferably, such fibres are added before any phase transfer step, if present. Additionally or alternatively, such fibres are optionally added before any drying step, if present. Such fibres may be included to increase mechanical stability of the gel, and/or to facilitate incorporation of a subsequent aerogel product into a blanket. Suitable fibre materials include inorganic fibres (e.g. glass fibres or mineral fibres) and organic fibres (e.g. polyester fibres, aramid fibres, nylon fibres, plant-based fibres) or compositions of both (e.g. polymer-coated inorganic fibres). Optionally, the fibres comprise active groups capable of bonding to the silica gel (such as to Si-OH groups of the silica gel).

Optionally, fibres are added to the third mixture prior to maximum or complete silylation. For example, it may be that fibres are added soon after the third mixture is formed, such as within 60 minutes, for example within 20 minutes, of the third mixture being formed. Without wishing to be bound by theory, it is believed that adding fibres prior to maximum or complete silylation may allow surface silanol groups of the gel to react with groups on the surface of the fibre, thus chemically bonding the gel to the fibres.

Optionally, the process further comprises after initiating gelation and silylation, and after the optional ageing step, a phase transfer step in which a phase transfer agent is added to the third mixture. It is understood that the phase transfer agent facilitates the migration of the polar solvent (e.g. water) from the pores of the gel slurry to the polar phase (e.g. aqueous phase). Accordingly, the phase transfer agent may also facilitate migration of apolar solvent and/or silylation agent (e.g. hexane, HMDSO) into hydrophobised pores. Optionally, the third mixture and the phase transfer agent are mixed for a period of time of between 1 and 60 minutes, most preferably a period of time of between 20 and 40 minutes, such as 30 minutes. Optionally, the phase transfer step is carried out at a temperature of between 0 °C and 100 °C, most preferably at a temperature of between 60 °C and 80 °C, such as 70 °C.

Optionally, phase transfer agent is a polar solvent, such as a polar solvent comprising an alcohol. Optionally, the additional polar solvent comprises one or more solvents selected from the list of: isopropanol, n-propanol, acetone, ethanol and butanol. Alternatively or additionally, the solvent transfer step may be promoted by ligand exchange and/or the addition of a polymer. During phase transfer, a solvent front progresses through the gel, effectively resulting in the gel being transferred from the third polar phase to the third apolar phase. It is believed that more effective hydrophobisation of gel pores by the silylating agent (as a result of simultaneous gelation and silylation) helps to promote rapid progression of the solvent front, thereby accelerating the phase transfer step and reducing overall process time.

Optionally, the process may further comprise adding an acid to the third mixture to further reduce the pH of the third polar phase of the third mixture, for example to reduce the pH of the third polar phase to ≤ 1.8, such as ≤ 1.5. The acid may be any acid described in relation to the acid of the second mixture. Optionally, the acid may be the same as the acid of the second mixture. Optionally, the acid is added to the third mixture during and/or after the phase transfer step. Further reducing the pH of the third mixture may increase the rate of and/or extent of hydrophobisation of the silica gel.

Optionally, the process may further comprise isolating a silica gel from the third mixture. Optionally, the step of isolating the silica gel may comprise separating the third polar phase from the third apolar phase, for example after the phase transfer step, wherein the silica gel is present in the apolar phase. Optionally, the process may further comprise decanting excess solvent and/or silylating agent from the third apolar phase, for example after the step of separating the third polar phase from the third apolar phase.

According to a second aspect, the present invention provides a process for preparing a silica aerogel by drying a silica gel obtained from or obtainable by a silica gel prepared by the process of the first aspect of the invention. For example, the process may comprise drying such a silica gel by removing the solvent of the silica gel so forming a silica aerogel. Optionally, the silica gel is dried at ambient pressure. Optionally, the gel is dried at a temperature effective to evaporate solvent, and/or at a temperature below the flash point of the solvent. Optionally, the silica gel is dried at a temperature of between 25 °C and 300 °C such as between 100 °C and 200 °C, for example between 150 °C and 180 °C. Optionally, the process comprises directly drying silica gel obtained by the process of the first aspect of the invention without any intermediate treatment of the silica gel after phase transfer (and optionally decanting excess solvent). For example, following phase transfer, the gel is optionally not subjected to any washing or other treatment steps. Optionally, solvent so removed comprises silylating agent, such as HEDSO or HMDSO (preferably HMDSO), preferably wherein the process further comprises collecting solvent (e.g. silylating agent) for re-use. For example, such silylating agent may be condensed from vapour evaporated from the gel. Optionally, the process comprises purifying silylating agent so collected prior to re-use. For example, purifying the silylating agent may comprise removing other solvents and/or phase transfer agent, e.g. so that the purified silylating agent is at least 95 wt% silylating agent (e.g. at least 95 wt% HEDSO and/or HMDSO), based on the weight of the purified silylating agent. Optionally, the process comprises producing a silica gel by the process of the first aspect of the invention, and drying the silica gel to obtain the silica aerogel. Optionally, a portion of the silylating agent used in producing the silica gel is recycled silylating agent, for example recycled silylating agent collected during the step of drying the silica gel. For example, the process preferably comprises collecting residual silylating agent during the step of drying the silica gel, and recycling at least a portion of the collected residual silylating agent so that at least one of the first mixture and the second mixture comprises recycled silylating agent. Optionally, the process comprises purifying the collected residual silylating agent prior to recycling, for example as described herein above.

According to a third aspect, the present invention provides a silica gel obtainable or obtained by the process of the first aspect of the invention. It is believed that the process of the first aspect of the invention provides a unique silica gel, for example due to a higher degree of smaller pore hydrophobisation providing an internal composition not obtained by other processes.

According to a fourth aspect, the present invention provides an admixture comprising a silica gel according to the third aspect of the invention and a plurality of fibres. Optionally, at least a portion of the silica gel is chemically bonded to at least a portion of the plurality of fibres. Optionally, the admixture comprises at least 5 wt%, such as at least 10 wt%, silica gel and/or at least 40 wt%, such as at least 50 wt%, fibres, based on the weight of the admixture. Optionally, the fibres are coated and/or uncoated fibres. Suitable fibre materials include inorganic fibres (e.g. glass fibres or mineral fibres) and organic fibres (e.g. polyester fibres, aramid fibres, nylon fibres, plant-based fibres).

According to a fifth aspect, the present invention provides a silica aerogel obtainable or obtained by the process of the second aspect of the invention. Optionally, the silica aerogel is in the form of a powder. It is believed that the process of the second aspect of the invention provides a unique silica aerogel, for example due to a higher degree of pore hydrophobisation during formation of the silica gel providing an internal composition not obtained by other processes. Yet further, it is believed that a higher degree of smaller pore hydrophobisation may result in reduced pore collapse during drying thereby leading to differences in internal structure, average pore size and/or pore size distribution. Optionally, the silica aerogel has a thermal conductivity of no more than about 20 mW/mK, such as a thermal conductivity of from about 12 to about 20 mW/mK, preferably from about 15 to about 18 mW/mK. Additionally or alternatively, the silica aerogel optionally has an average pore diameter (d_{pore(N2)}) of from about 2 to about 70 nm, preferably about 5 to about 50 nm, by nitrogen sorption analysis. Additionally or alternatively, the silica aerogel optionally has a pore volume of from about 2 to about 5 cm³/g, preferably about 3.5 to about 5 cm³/g, by nitrogen sorption analysis (V_{pore(N2)}). Additionally or alternatively, the silica aerogel optionally has a surface area of from about 400 to about 900 m²/g, preferably about 550 to about 800 m²/g, by nitrogen sorption analysis (S_{BET}). Additionally or alternatively, the silica aerogel has a tap density of from about 0.08 to about 0.3 g/mL, preferably about 0.1 to about 0.15 g/mL.

According to a sixth aspect, there is provided an insulation product comprising a silica aerogel according to the fifth aspect of the invention. Optionally, the insulation product is an admixture of the silica aerogel and fibres, an insulation board or an insulation blanket (for example an insulation board or an insulation blanket comprising an admixture of the silica gel and fibres). It will be understood that an insulation board may be, for example, a rigid sheet of insulating material, while an insulation blanket may be, for example, a flexible sheet of insulating material. Optionally, the insulation product has a thermal conductivity of no more than about 25 mW/mK, such as a thermal conductivity of from about 12 to about 25 mW/mK, preferably from about 15 to about 20 mW/mK. Optionally, when the insulation product is (or comprises) an admixture of silica aerogel and fibres, at least a portion of the silica aerogel is chemically bonded to at least a portion of the fibres. Optionally, the admixture comprises at least 5 wt%, such as at least 10 wt%, silica gel and/or at least 40 wt%, such as at least 50 wt% fibres, based on the weight of the admixture. Optionally, the fibres are coated and/or uncoated fibres. Suitable fibre materials include inorganic fibres (e.g. glass fibres or mineral fibres) and organic fibres (e.g. polyester fibres, aramid fibres, nylon fibres, plant-based fibres).

It will of course be appreciated that features described in relation to one aspect of the present invention may be incorporated into other aspects of the present invention. For example, the process(es) of the invention may incorporate any of the features described with reference to the gel or aerogel of the invention and *vice versa.*

### Description of the Drawings

Embodiments of the present invention will now be described by way of example only with reference to the accompanying schematic drawings of which:

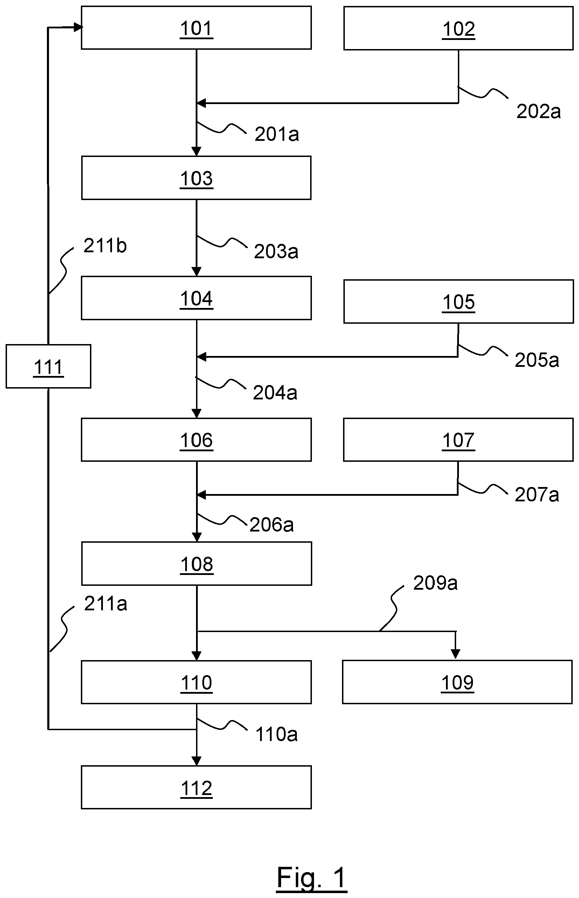

Figure 1 shows a schematic of an embodiment of a process according to the invention.

### Detailed Description

Figure 1 shows a schematic of an embodiment of a process according to the invention. The process comprises forming a first mixture 101 comprising a dispersion of HMDSO (silylating agent and solvent), water glass (silica gel precursor) and surfactant, and a second mixture 102 comprising a dispersion of HMDSO, nitric acid and a surfactant. It will be understood that the first mixture may be alternatively be free from HMDSO, and that use of surfactant is optional. The first mixture is stirred 201a and the second mixture is added continuously 202a, thereby forming the third mixture 103, which is a dispersion of HMDSO, water glass, nitric acid and a surfactant. The third mixture 103 is aged with stirring 203a to form an aged third mixture 104. The aged third mixture 104 is stirred 204a and isopropanol (phase transfer agent) 105 is added 205a, providing a solvent exchanged third mixture 106. The solvent exchanged third mixture 106 is stirred 206a and additional nitric acid 107 may be added 207a, providing a further acidified solvent exchanged third mixture 108. The polar phase 109 of the further acidified third mixture 108 is separated 209a, providing a mixture 110 comprising at least HMDSO and hydrophobised silica gel. The mixture 110 is dried 110a to provide a silica aerogel 112, and a mixture 111 comprising HMDSO collected 211a during drying 110a. HMDSO in mixture 111 may be purified 211b and recycled to the first mixture 101. Not shown in Figure 1 is addition of fibres, which could for example be added to the first mixture 101, and/or prior to or during ageing 203a, and/or at any other time before drying 110a, thereby providing a product comprising silica aerogel 112 chemically bonded to the fibres. The overall process time from formation of a batch of the first mixture 101 to isolation of silica aerogel 112 may be under 10 hours, or even under 5 hours.

It will be appreciated that various steps and reaction components referred to in the foregoing embodiment are optional. For example, surfactant may or may not be present, other silylating agents, silica sources and/or acids may be used, the silylating agent may be absent from the first mixtures, and additional acid 107, recycling of silylating agent, and/or purification of silylating agent 211b could be omitted.

### Silica Gel and Silica Aerogel

The present invention provides processes of preparing silica gels and silica aerogels. A silica aerogel is a product obtained from a silica gel after drying, i.e. when solvent is removed from the gel. The process of the invention provides a hydrophobised silica aerogel by reaction of surface silanol groups of the gel during gelation and optional further processing steps, with a silylating agent.

Preferably, the silylating agent is hexamethyldisiloxane (HMDSO) and/or hexaethyldisiloxane (HEDSO). It will be understood that when HMDSO or HEDSO are used as the silylating agent, a portion of the silanol surface groups of the silica gel is functionalised with a trimethylsilyl or triethylsilyl group. The silica aerogel may comprise from 6 wt% to 20 wt% carbon derived from the silylating agent, preferably 8 wt% to 14 wt% carbon derived from the silylating agent, based on the weight of the silica aerogel. It will be understood that the carbon present in the samples originates from silyl groups, and that the silyl groups are bound to the surface through the reaction with silanol groups of the silica gel.

According to the present process, the step of preferably simultaneously gelling and silylating a silica gel precursor by combining the first mixture (comprising the silica gel precursor) and second mixture (comprising the acid) results in a silica gel that is partially hydrophobised by the silylating agent. Additional treatment of the silica gel with a phase transfer agent and/or a further, separate acid addition may further increase the hydrophobisation of the silica gel. When the silylating agent is hexamethyldisiloxane (HMDSO) and/or hexaethyldisiloxane (HEDSO), the silica gel prepared by the simultaneous gelling and silylating step (e.g. a silica gel of the third mixture) may optionally comprise from 0.05 to 1 wt%, preferably 0.1 to 0.5 wt%, carbon derived from the silylating agent, based on the dry weight of the silica gel. It will be understood that the dry weight of the silica gel is the weight of silica gel isolated from the third mixture and separated from solvent and any unreacted reagents (such as water glass and silylating agent) present in the third mixture. It will be understood that the silica gel formed by simultaneous gelation and silylation is the gel formed prior to phase transfer, optionally after ageing if the silica gel of the third mixture is aged. As above, it will also be understood that the carbon present in the samples are from silyl groups, and that the silyl groups are bound to the surface through reaction with silanol groups of the silica gel.

When the silylating agent comprises carbon, for example when the silylating agent is HMDSO and/or HEDSO, the silica aerogel may have a carbon content of no more than 20 wt%, most preferably no more than 15 wt%. The carbon content of the silica aerogel may be determined using the ¹H NMR spectroscopy method described herein. Providing such a silica aerogel is particularly advantageous because the carbon content of the aerogel may be within acceptable limits to meet fire safety standards while sufficient hydrophobisation of the aerogel is achieved (e.g. when the silylating agent is HEDSO or HMDSO, preferably HMDSO).

The silica aerogels may be in the form of silica aerogel particles. The silica aerogels may be granulate or powder. The particles may be substantially spherical.

The silica aerogels may have a tap density of from about 0.08 g/mL to 0.3 g/mL, optionally from about 0.10 to about 0.25 g/mL, most preferably from about 0.10 to about 0.15 g/mL. The tap density of the silica aerogel may be measured with a tap density volumeter as described herein.

The specific surface area (S_{BET}) of the silica aerogel may be measured by nitrogen sorption analysis and the resulting data analysed using the Brunauer-Emmett-Teller (BET) theory as described herein. The S_{BET} of the silica aerogel may be for example from about 500 m²/g to about 750 m²/g, such as between about 550 and 700 m2/g.

Pore volume (V_{pore(N2)}) and average pore size (width) (d_{pore(N2)}) may be calculated using the relations V_{pore(N2)} = 1/ρ - 1/ρ_{solid}, where ρ_{solid} is skeletal density (which can be assumed to be 1.8 g/cm³ for a hydrophobised silica aerogel) bulk density (ρ) is determined from sample mass (after degassing) and total volume, and d_{pore(N2)} = 4· V_{pore(N2)}/(S/m).

The silica aerogels may have a thermal conductivity of from about 12 to about 20 mW/mK, preferably from about 15 to about 18 mW/mK. The thermal conductivity may be measured using a guarded three-plate device as described herein. The thermal conductivity may be substantially stable over time such that the thermal conductivity decreases by no more than 5% over a period of time of at least 3 months, preferably at least 6 months.

### Process of preparing the silica gel

Silica gels according to the present invention may be prepared by combining a silica gel precursor, water, silylating agent and acid to gel the silica gel precursor while simultaneously silylating the forming silica gel. The various components of the reaction mixtures used in the present process will now be described. It will be understood that the various components described may be used in any combination.

The components may be provided in the form of one or more mixtures as will be described herein. For example, the silica gel precursor and water may be provided in a first mixture. Optionally, the first mixture may be in the form of a dispersion or emulsion comprising a first polar phase and a first apolar phase. Owing to the polarity of the silica gel precursor and water, it will be understood that the first polar phase comprises the silica gel precursor and water. The acid may be provided in a second, separate mixture. The silylating agent may be provided in either or both of the first and second mixture, preferably at least in the second mixture.

According to the invention, the first and second mixtures are combined to form a third mixture in which the silica gel is formed and preferably simultaneously silylated. In forming the third mixture, the second apolar phase and an optional apolar phase present in the first mixture (i.e. a first apolar phase) combine to form a single, third apolar phase. Likewise, polar phases of the first and second mixtures (if present) (i.e. first polar phase and second polar phase) combine to form a single, third polar phase. The addition of the second mixture comprising acid to the first mixture results in the third mixture having a third polar phase having a pH less than the pH of the first polar phase of the first mixture. It will be understood that water (i.e. at least water from the first mixture) is also present in the third polar phase of the third mixture.

After simultaneous gelation and silylation of the silica gel, further processing steps may be implemented as described herein. Optionally, coated and/or uncoated fibres are contacted with the gel slurry at any stage after the third mixture is formed.

Further steps including ageing the silica gel slurry, further increasing the hydrophobicity of the silica gel, isolating the silica gel, and/or the silica gel may be dried to form an aerogel.

### Silica Gel Precursor

The silica gel precursor comprises a starting material for the repeating units [SiO_{4/2}] of the silica gel. The silica gel precursor may comprise or be derived from water glass, waste glass (or other recyclable sources such as rice husk ash), alkoxysilanes (for example, potassium methylsiliconate, sodium methylsiliconate, tetraethoxysilane, tetramethoxysilane, methyltrimethoxysilane, and methyltriethoxysilane), clays (e.g. aluminosilicates), aerogels (for example aluminium/gallium/indium or zinc aerogels), and any mixture thereof. Preferably, the silica gel precursor comprises a silicate, alkoxysilane, or mixtures thereof. Preferably the silica gel precursor is water soluble. Preferably, the silica gel precursor comprises a silicate and the silicate is an alkali metal silicate. Most preferably, the silica gel precursor comprises sodium silicate and/or potassium silicate. Water glass is an aqueous solution of sodium silicate and/or potassium silicate.

Preferably, the silica gel precursor is provided as an aqueous solution. Optionally, the aqueous solution of the silica gel precursor comprises from 2 wt% to 15 wt% silica gel precursor based on the total weight of the aqueous solution. Optionally, the aqueous solution of silica gel precursor comprises from 4 to 10 wt% silica gel precursor based on the total weight of the aqueous solution. If the silica gel precursor is in the form of a salt, for example alkali metal silicate, it will be understood that the wt% of the silica gel precursor does not include the mass of any counterions present.

### Silylating agent

The silylating agent replaces a reactive hydrogen of silanol groups on the surface of the gel with a silyl group (-SiRR'R"). Preferably, the silylating agent is a siloxane such as a disiloxane of the general formula R^{a}R^{a}'R^{a}" Si-O-SiR^{b}R^{b}'R^{b}" wherein at least one of R^{a}, R^{b}, R^{a}', R^{b}', R^{a}" and R^{b}" are a saturated or unsaturated alkyl. Preferably, each of R^{a}, R^{b}, R^{a}', R^{b}', R^{a}" and R^{b}" are a C₁-C₄ saturated or unsaturated alkyl group, most preferably a C₁-C₂ saturated alkyl group. Optionally, the silylating agent comprises at least one of hexamethyldisiloxane (HMDSO), hexaethyldisiloxane (HEDSO), hexapropyldisiloxane (HPDSO), hexamethyldisilazane (HMDZ), trimethylchlorosilane (TMCS), triethylchlorosilane (TECS), methyltrimethoxysilane (MTMS), methyltriethoxysilane (MTES) and derivatives thereof. Most preferably, the silylating agent is hexamethyldisiloxane (HMDSO) and/or hexaethyldisiloxane (HEDSO), and/or collected and recycled derivatives thereof. It will be understood that recycling silylating agents, such as HMDSO and/or HMDSO, may result in silylating agent derivatives forming during an earlier reaction process and/or the collection process. For example, the silylating agent may optionally comprise non-symmetrical disiloxanes formed by reaction of activated silylating agent and solvent and/or phase transfer agent. Such non-symmetrical disiloxanes include the reaction product of HMDSO and isopropanol (IPA) referred to as TMS-O-IPA.

Preferably, the silylating agent is provided in the second mixture and is optionally present in the first mixture. The silylating agent may form the major component of the second apolar phase of the second mixture. For example, the silylating agent may comprise > 20 vol% of the second apolar phase of the second mixture, optionally > 50 vol% of the second apolar phase of the second mixture, for example > 90 vol%.

### Apolar phase

The apolar phase of the first mixture (the first apolar phase) may comprise an apolar solvent or a mixture of apolar solvents. The apolar phase of the first mixture may comprise one or more of the following apolar solvents: HMDSO, HMDZ, C₆-C₁₂ aliphatic hydrocarbon (hexane, heptane and octane are particularly preferred), C₆-C₁₂ aromatic hydrocarbon (toluene, and benzene are particularly preferred), TMS-Cl. Most preferably, the apolar phase of the first mixture comprises HMDSO and/or collected and recycled derivatives thereof.

Optionally, the second mixture comprises an apolar phase i.e. a second apolar phase. The second apolar phase may comprise one or more of the apolar solvents listed above in reference to the first apolar phase of the first mixture. When both the first mixture and second mixture comprise one or more apolar solvents, the third mixture will comprise a single apolar phase comprising each of the apolar solvents of the first and second mixture.

When the apolar phase of the first mixture and/or the optional apolar phase of the second mixture comprises HMDSO, HMDSO may be the major component of the apolar phase. It will be understood that if HMDSO and/or HEDSO is present, the HMDSO and/or HEDSO are apolar solvents and also silylating agents as described herein.

### Polar phase

The polar phase of the first mixture i.e. the first polar phase, comprises water. It may be that water is the sole polar solvent of the first polar phase and thus the first polar phase is water. Alternatively, the first polar phase may comprise a mixture of polar solvents including water and at least one other polar solvent such as a C₁-C₁₀ alcohol and/or acetone. When the first polar phase comprises water and at least one additional solvent, the first polar phase comprises > 50% by volume of water, optionally > 80% by volume of water, such as > 90% by volume of water.

The second mixture comprises an acid which may optionally be in the form of an aqueous acid solution. When the second mixture comprises an aqueous acid solution, the aqueous acid solution is itself a polar phase. In addition to the aqueous acid solution, the second mixture may comprise further polar solvents and thus the second mixture may comprise a second polar phase comprising the aqueous acid solution and one or more further polar solvents. The one or more polar solvents may be selected from the list recited above in relation to the first polar phase. If present, the polar phase(s) of the first mixture and polar phase(s) of the second mixture combine to form a single polar phase in the third mixture (the third polar phase).

### Acid

The acid may comprise an inorganic acid, such as a mineral acid, or an organic acid. The acid may comprise one or more acids from the following: HNO₃, HCl, H₂SO₄, H₃PO₄, HClO₄, HI, HBr, HF, and methanesulfonic acid.

Optionally, the acid is provided in the form of an acid solution, preferably an aqueous acid solution. The acid solution may have a molar concentration of from 1M to 16M, such as from 6M to 10M.

### Surfactants

One or more surfactants may be present in the first mixture to stabilise a dispersion or emulsion of the first polar phase and a first apolar phase. The second mixture may optionally comprise a surfactant. This may be particularly advantageous when the second mixture comprises polar and apolar phases (e.g. a second polar phase comprising an acid), and the second mixture is a dispersion or emulsion of the polar and apolar phases. In general terms, it will be understood that a surfactant may, for example, be any substance that reduces interfacial tension between a polar and an apolar phase, and/or a substance capable of stabilising an emulsion in the first, second and/or third mixtures. Additionally or alternatively, a surfactant may, for example, be a compound comprising one or more hydrophobic groups as well as one of more hydrophilic groups, such as a chemical compound or molecule that contains a hydrophobic (e.g. non-polar) part covalently connected to a polar hydrophilic (e.g. polar) part.

Suitable surfactants include, for example, ionic surfactants (e.g. cationic or anionic surfactants), non-ionic surfactants and/or zwitterionic surfactants. Optionally the surfactant is a non-ionic surfactant, such as a sorbitan ester and/or silicon-based non-ionic surfactant. Optionally, the first mixture, second mixture and/or third mixture comprises one or more ionic surfactants (e.g. cationic or anionic surfactants), non-ionic surfactants and/or zwitterionic surfactants. Optionally, the first mixture, second mixture and/or third mixture comprises one or more non-ionic surfactants. Suitable non-ionic surfactants include: sorbitan esters, polyethylene glycol oleyl ethers, alkoxylated alcohols, polymeric surfactants, ethoxylated surfactants, ethoxylated esters, polyethylene glycols and polyol esters (such as Sucrose Distearate, PEG 30 Dipolyhydroxystearate, glyceryl stearate, sorbitan isostearate, Steareth-2 and/or PEG-8 Distearate, Glyceryl Stearate and/or PEG-100 Stearate, Sorbitan Oleate and/or PEG-7 Hydrogenated Castor Oil), silicon based surfactants (such as Cetyl PEG/PPG-10/1 Dimethicone or fumed silica), and soybean lecithin.

### Ageing

Optionally, the process comprises ageing the silica gel slurry formed once the first and second mixtures are combined. The silica gel slurry may be aged for a period of time of between 1 minute and 240 minutes, preferably between 30 minutes and 120 minutes. During the ageing process, the silica slurry may be mixed or agitated. Optionally, the silica gel slurry is aged at a temperature of between 0 °C and 100 °C, preferably between 20 °C and 70 °C.

### Phase transfer

Optionally, the third mixture may be subjected to a phase transfer step. In the optional phase transfer step, a phase transfer agent is added to the third mixture, preferably after the ageing step.

Optionally, the third mixture and phase transfer agent are mixed for a period of time of between 1 and 270 minutes, such as between 20 and 120 minutes. Optionally the phase transfer step is carried out at a temperature of between 0 °C and 100 °C, preferably between 60 and 85 °C.

Optionally, the phase transfer agent comprises a polar solvent such as an alcohol. Particularly preferred phase transfer agents comprise one or more of the following polar solvents: isopropanol, n-propanol, ethanol, butanol and acetone. Additionally or alternatively, it will be understood that a phase transfer agent may for example be any substance (such as a surfactant and/or small molecule) that reduces interfacial tension between the third polar phase and the third apolar phase.

Additionally or alternatively, phase transfer may occur via ligand exchange.

### Additional Hydrophobisation

The process may comprise a second silylation step after the third mixture is formed. The process may further comprise a second acid addition step after the third mixture is formed to promote silylation of remaining surface silanol groups of the silica gel in the second silylation step. This step is particularly preferred when the silylating agent, such as HMDSO and/or HEDSO, is provided in excess such that unreacted silylating agent remains after the formation of the third mixture. Optionally, an acid is added to the third mixture to lower the pH, for example acid is added to the third mixture to reduce the pH of the solution to <2. Preferably, if a second acid addition step is used, the acid is added during and/or after the phase transfer step.

Following addition of the additional acid to the third mixture, the reaction mixture may be mixed for a period of time of between 1 minute and 360 minutes. Optionally, the reaction mixture is mixed at a temperature between 0 °C and 100 °C, preferably between 40 and 85 °C.

### Additives

One or more additives such as fibres, nanoparticles, opacifiers, microparticles, crosslinker agents and polymers may be added to the third mixture or gel slurry prior to and/or during ageing the slurry. It may be particularly preferred to include inorganic fibres (e.g. glass fibres or mineral fibres) and organic fibres (e.g. polyester fibres, aramid fibres, nylon fibres, plant-based fibres).

### Solvent exchange

The process may further comprise a solvent exchange step in which the solvent of the silica gel formed in the third mixture is replaced. The solvent exchange step may comprise adding one or more of the following solvents to the third mixture: water, alcohol (e.g. ethanol, isopropanol, alcohol mixtures), fluorinated ether, CO₂, apolar solvents (e.g. alkanes such as hexane and/or heptane), and/or a mixtures thereof. It will be understood that such solvent exchange may for example be in addition to solvent exchange carried out during a phase transfer step.

### Isolating silica gel and drying

The silica gel may be isolated from the third mixture. Following isolation, the silica gel may be dried by removing solvent according to methods known in the art. For example, the solvent may be removed by drying the silica gel at ambient pressure and a temperature of between 25 °C and 300 °C, such as between 100 °C and 200 °C. Additionally or alternatively, the silica gel may be dried to form the silica aerogel by vacuum drying, freeze-drying, low temperature and high temperature supercritical drying.

### Applications

Silica gels according to the present invention may find application in forming insulation materials such as insulation blankets, fire blankets, films, aerogel powders, foams, plasters and paints.

### Examples

### Materials used for the examples:

Sodium silicate solution (7.5 - 8.5% Na₂O; 25.5 - 28.5% SiO₂, Extra Pure, Supelco^{®}, Merck), Hexamethyldisiloxane (HMDSO, 98+%, Thermo Scientific Chemicals), Sorbitane monooleate (Span 80, Sigma-Aldrich), Nitric Acid (HNO₃, 70%, d=1.42, Extra Pure, Fisher Chemical^{™}), 2-Propanol (Isopropanol (IPA) ≥ 99.8%, Honeywell).

### Preparation of water glass solution:

The water glass was diluted in glass containers with distilled water until a SiO₂ content of 6 wt% was obtained. The sodium silicate solutions were vigorously stirred.

### Determination of carbon content:

The carbon content was determined by ¹H Nuclear Magnetic Resonance (NMR) spectroscopy. The experiments were carried out according to Malfait, W. J., Verel, R., & Koebel, M. M. (2014), "Hydrophobization of silica aerogels: insights from quantitative solid-state NMR spectroscopy", The Journal of Physical Chemistry C, 118(44), 25545-25554. Briefly, the ¹H NMR spectra were determined on a known mass of sample, loaded into 2.5 mm zirconia rotors that were spun at a magic-angle spinning (MAS) rate of 24 kHz. Single pulse ¹H NMR spectra were acquired with a long recycle delay (15 s, >5**T*₁, *T*₁ is typically <2s for silica aerogels) to ensure full relaxation and rotors were filled completely to ensure no differential excitation due to different positions in the rotor/coil. The spectrum of an empty rotor was also acquired using the same conditions and subtracted from the sample spectra to remove signal from the rotor/caps/probe-head. Three reference materials (adamantane, octakis(trimethylsiloxy)silsesquioxane (Q8M8) and tetrakis(trimethylsilyl)silane) were measured under the same conditions to convert absolute NMR intensities into mass loadings of hydrogen in the rotors. From these, the molar and mass loading of trimethylsilyl groups in the aerogel samples could be determined.

### Determination of Specific Surface Area:

The specific surface area (*S*_{BET}) was assessed by nitrogen gas sorption at 77 K (3Flex Version 5.00, *Micromeritics Instrument Corp.*)*,* applying the Brunauer-Emmett-Teller (BET) theory in the relative pressure interval 0.05-0.25 of the sorption isotherm.

### Determination of Tap Density:

The tap density was calculated from the respective mass and volume of the aerogel powders using a tap density volumeter with measurement cylinders from 100 to 250 cm³ after 50000 taps.

### Determination of the yield:

To determine the yield, the silica gel particles were dried and then weighed at room temperature.

### Determination of the thermal conductivity:

The thermal conductivity of the silica aerogel powders were measured in a guarded three-plate device. The measurements were performed with a mean temperature of 20°C. The powder was slightly compressed into the sample holder in order to remove the air layers between the silica particles to avoid distortion by the thermal conductivity of standing air.

### Fouling observations:

Observations were recorded on propensity of solutions to foul reaction vessels and other equipment. Reactions with low fouling have greater promise for successful scale-up.

### Example 1

The first mixture was prepared by dissolving a sorbitan ester surfactant (<1 wt%) in 200 mL of hexamethyldisiloxane, then adding a 6 wt% pre-prepared water glass solution (pH 12-14). The resulting emulsion was heated to 35°C. The second mixture was prepared by dissolving a sorbitan ester surfactant (<1 wt%) in hexamethyldisiloxane (HMDSO) with stirring, then adding HNO₃ solution to give a pH of about 0-1. To simultaneously initiate gelation and silylation, the second mixture was continuously added to the main mixture so that the aqueous phase (third polar phase) of the resulting third mixture had a pH that was less than 2. Once the addition of the second mixture was complete, the resulting mixture was heated to approximately 45 °C. After stirring at 45 °C, isopropanol was added and the temperature increased to 70 °C. After stirring, the solution was transferred into a separating funnel, where the aqueous phase was removed (thereby separating the third polar phase from the third apolar phase), and the organic layer (the third apolar phase) was transferred into a crystallising dish and dried in ambient pressure at >150 °C. The whole process took less than 5 hours.

### Example 2

The procedure of Example 1 was repeated, except that additional HNO₃ solution was added to the third mixture after addition of phase transfer agent and the third mixture was stirred for longer so that the whole process took less than 9 hours. The additional acid treatment reduced the pH of the third polar phase to lower than 1.5.

### Example 3

The procedure of Example 2 was repeated, except that HMDSO recovered from the drying of the silica gel product of Example 2 was used in the main mixture (first mixture).

### Example 4

Example 2 was repeated at 10x scale in terms of reagents. Timings were kept substantially the same.

### Example 5

Example 4 was repeated, except that HMDSO recovered from the drying of the silica gel product of Example 4 was used in the main mixture (first mixture).

### Example 6

Example 4 was repeated, except that no surfactant was included in either the first mixture (thus the first mixture comprised only HMDSO and water glass solution) or the second mixture (thus the second mixture comprised only HMDSO and HNO₃ solution).

### Example 7

The first mixture was prepared by dissolving sorbitan ester surfactant (< 1 wt%) in 200 mL of hexamethyldisiloxane with stirring, then adding a 6wt% pre-prepared water glass solution. The resulting emulsion was heated to 35°C. The second mixture was prepared by dissolving sorbitan ester surfactant (<1 wt%) in hexamethyldisiloxane (HMDSO) with stirring, then adding a HNO₃ solution to give a pH of ~0-1. To initiate gelation, the second mixture was continuously added to the first mixture so that the aqueous phase (third polar phase) of the resulting third mixture had a pH that was around 9-10. Once the addition of the second mixture was complete, the resulting mixture was heated to approximately 70 °C. After stirring at 70 °C, isopropanol was added. Subsequently, further HNO₃ solution was added, lowering the pH of the third polar phase of the third mixture to between 1.5 and 2.1. After stirring, the solution was transferred into a separating funnel, where the aqueous phase was removed (thereby separating the third polar phase from the third apolar phase), and the organic layer (the third apolar phase) was transferred into a crystallising dish and dried in ambient pressure at > 150 °C. The whole process took less than 9 hours.

### Example 8

Example 7 was repeated, except that the pH of the third polar phase of the third mixture was between 10 and 11 after the addition of the acid mixture (second mixture), and the third mixture was then heated to approximately 45 °C. Furthermore, the temperature was raised to 70 °C.

### Example 9

Example 7 was repeated, except that a slightly higher amount of the second mixture was added to the first mixture, so that the pH of the third polar phase of the third mixture was around 9 after the second mixture addition, and less than 1.5 after addition of further HNO₃.

### Example 10

Example 1 was repeated, except that no surfactant was included in either the first mixture (thus the first mixture comprised only HMDSO and water glass solution) or the second mixture (thus the second mixture comprised only HMDSO and HNO₃ solution).

### Example 11

Example 1 was repeated, except that no surfactant was included in the second mixture (thus the second mixture comprised only HMDSO and HNO₃ solution).

### Example 12

Example 2 was repeated, except that no surfactant was included in either the first mixture (thus the first mixture comprised only HMDSO and water glass solution) or the second mixture (thus the second mixture comprised only HMDSO and HNO₃ solution).

### Example 13

Example 2 was repeated, except that no surfactant was included in the second mixture (thus the second mixture comprised only HMDSO and HNO₃ solution).

### Example 14

Example 4 was repeated, except that no additional HNO₃ was added after addition of isopropanol.

### Example 15

Example 2 was repeated at 50x scale in terms of reagents. Timings were kept substantially the same.

### Example 16

Example 1 was repeated, except that no surfactant was included in the first mixture (thus the first mixture comprised only HMDSO and water glass).

### Example 17

Example 2 was repeated, except that no surfactant was included in the first mixture (thus the first mixture comprised only HMDSO and water glass).

### Example 18

Example 10 was repeated, except that the third mixture was stirred for longer after isopropanol addition, increasing the overall process time to under 9.

### Example 19

Example 1 was repeated, except that the aged gel was not subjected to phase transfer (i.e. no isopropanol was added). A sample of the aged gel was analysed for carbon content according to the ¹H NMR methodology described hereinabove. It was found that the aged gel, prior to phase transfer and further hydrophobization, had a carbon content of about 0.15 wt%. It is believed that such a carbon content of the gel prior to phase transfer is indicative of simultaneous gelation and silylation.

### Analysis of results

Properties of the products and observations on the level of equipment fouling are set out in Table 1 below. Examples 1-3 demonstrate that the process of the invention, in which gelation and silylation is performed simultaneously due to rapid lowering of pH with the addition of acid emulsion (second mixture) to the main emulsion (first mixture), is able to provide aerogel powders with low thermal conductivity with or without further acid addition, and using recycled solvent/silylating agent. Examples 4 and 5 demonstrate that the processes of Examples 2 and 3, respectively, can be scaled up without impairing product properties. Example 15 demonstrates the further scalability of Example 2, and in particular that a low level of fouling is still achieved at 50x scale. Examples 11 and 13 demonstrate that low thermal conductivity is also achieved when the second mixture is provided as a dispersion (without surfactant), with and without additional acid, while Examples 16 and 17 demonstrate that low thermal conductivity is also achieved when the first mixture is provided as a dispersion (without surfactant), with and without additional acid post the first addition. Examples 10, 12 and 18 provide results of processes in which both the first and second mixtures are dispersions (i.e. no surfactants) - all three examples provide aerogels, although comparison between them shows that running the reaction for longer, with and without further acid addition, provides a significant thermal conductivity improvement. Example 6 demonstrates the scalability of Example 12. Examples 7, 8 and 9 demonstrate that effective aerogel production is also achieved with a higher polar phase pH after the first acid addition. Without wishing to be bound by theory, it is believed that providing the second mixture as a dispersion/emulsion of the silylating agent and acid helps improve acid distribution in the third mixture, thereby allowing for better reaction control and improved product consistency, which is especially beneficial at larger scales. It is also believed that the dispersion/emulsion of acid pre-activates the silylating agent, promoting simultaneous silylation and gelation which increases the level of smaller pore silylation, helping to avoid undue pore collapse and decreasing thermal conductivity. It has also been observed that the addition of small amounts (<1.5 wt%) of surfactant into the first and/or second mixture can provide a more beneficial reduction in thermal conductivity and in fouling.

It is also believed that the silylation occurring in the simultaneous silylation and gelation step could speed up the phase transfer step and result in a shorter reaction time.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Table 1 - Experimental Results**

| **Example #** | **Tap density (g/mL)** | **^{S}BET (m²/g)** | **Yield (g)** | **Carbon content (wt%)** | **Thermal conductivity (mW/mK (16.95))** | **Fouling** |
|---|---|---|---|---|---|---|
| 1 | 0.133 | | 7.725 | 10.92 | 17.0 | Low |
| 2 | 0.117 | 624.65 ± 6.14 | 10.444 | 11.27 | 15.4 | Low |
| 3 | 0.137 | 692.70 ± 6.94 | 10.329 | | 16.1 | Low |
| 4 | 0.124 | 695.70 ± 6.90 | 106.812 | 11.45 | 15.8 | Low |
| 5 | 0.123 | | 108.564 | 11.67 | 16.0 | Low |
| 6 | 0.14 | | 92.16 | 11.76 | 16.8 | Medium |
| 7 | 0.129 | | 8.52 | | 19.8 | Medium |
| 8 | 0.125 | | 8.61 | | 19.2 | Medium |
| 9 | 0.123 | | 7.47 | | 20.6 | Medium |
| 10 | 0.255 | | 10.46 | | 31.9 | Medium |
| 11 | 0.123 | | 10.67 | | 16.6 | Medium |
| 12 | 0.115 | | 10.62 | | 16.8 | Medium |
| 13 | 0.114 | | 10.37 | | 16.4 | Medium |
| 14 | 0.13 | 667.35 ± 6.36 | 108.96 | | 15.8 | Low |
| 15 | 0.16 | 581.36 ± 5.99 | 528.48 | | 17.1 | Low |
| 16 | 0.118 | | 9.46 | | 16.9 | Low |
| 17 | 0.123 | | 10.92 | | 16.8 | Low |
| 18 | 0.179 | | 10.56 | | 21.4 | Medium |

## Claims

1. A process of preparing a silica gel, the process comprising:
gelling and silylating a silica gel precursor by combining:
(i) a first mixture comprising a first polar phase comprising the silica gel precursor and water; and,
(ii) a second mixture comprising an acid;
to form a third mixture comprising a dispersion or emulsion of a third polar phase and a third apolar phase, the third polar phase having a pH less than the pH of the first polar phase of the first mixture;
wherein the second mixture comprises a second apolar phase comprising a silylating agent.

2. The process of claim 1, wherein the silylating agent is a siloxane, such as a disiloxane of the formula R^{a}R^{a}'R^{a}"Si-O-SiR^{b}R^{b}'R^{b}" wherein at least one of R^{a}, R^{b}, R^{a}', R^{b}', R^{a}" and R^{b}" are a saturated or unsaturated alkyl, optionally wherein the silylating agent is hexamethyldisiloxane (HMDSO) and/or hexaethyldisiloxane (HEDSO).

3. The process of claim 1 or claim 2, wherein the second mixture comprises a dispersion or emulsion of a second polar phase and the second apolar phase, optionally wherein the second mixture further comprises at least one surfactant and the second mixture is an emulsion of the second polar phase and the second apolar phase stabilised by the at least one surfactant.

4. The process of any preceding claim, wherein the first mixture comprises a dispersion or emulsion of the first polar phase and a first apolar phase, optionally wherein the first mixture further comprises at least one surfactant and the first mixture is an emulsion of the first polar phase and the first apolar phase stabilised by the at least one surfactant.

5. The process of any preceding claim, wherein the second apolar phase, and optionally if present the first apolar phase, comprises hexamethyldisiloxane (HMDSO) and/or hexaethyldisiloxane (HEDSO), wherein HMDSO and/or HEDSO is present in the second apolar phase in an amount of at least 20 vol% based on the volume of the second apolar phase; optionally wherein HMDSO and/or HEDSO is present in the first apolar phase in an amount of at least 20 vol% based on the volume of the first apolar phase, if the first apolar phase is present.

6. The process according to claim 5, wherein the process comprises recycling HMDSO and/or HEDSO separated from a silica gel mixture and:
(i) using at least a portion of the recycled HMDSO and/or HEDSO to form at least a portion of the second mixture; and/or
(ii) mixing at least a portion of the recycled HMDSO and/or HEDSO with silica precursor and water to form at least a portion of the first mixture;
optionally wherein the silica gel mixture comprises a silica gel prepared according to the process of any preceding claim.

7. The process of any preceding claim, wherein the silica gel precursor comprises a silicate, alkoxysilane, or mixtures thereof, optionally wherein the silica gel precursor comprises an alkali metal silicate, preferably wherein the silica gel precursor comprises sodium silicate and/or potassium silicate.

8. The process of any preceding claim, wherein the acid comprises an inorganic acid, such as a mineral acid, preferably nitric acid.

9. The process of any preceding claim, wherein the pH of the first polar phase of the first mixture is > 7 and the pH of the third polar phase of the third mixture is ≤ 4, such as ≤ 3.

10. The process of any preceding claim, wherein:
combining first mixture and the second mixture comprises adding the second mixture to the first mixture over a period of no more than 60 minutes, more preferably no more than 45 minutes; and/or
combining first mixture and the second mixture comprises adding the second mixture to the first mixture substantially continuously.

11. The process of any preceding claim, further comprising at least one of:
ageing silica gel of the third mixture for a period of time of between 1 minute and 240 minutes, preferably between 30 minutes and 120 minutes, optionally wherein the silica gel of the third mixture is aged at a temperature of between 0 °C and 100 °C, most preferably at a temperature of between 35 °C and 70 °C, optionally wherein coated and/or uncoated fibres are added to the third mixture during the step of ageing;
subjecting the third mixture to a phase transfer step in which a phase transfer agent is added to the third mixture, optionally wherein the third mixture and the phase transfer agent are mixed for a period of time of between 1 and 270 minutes, most preferably a period of time of between 20 and 120 minutes, optionally wherein the phase transfer step is carried out at a temperature of between 0 °C and 100 °C, most preferably at a temperature of between 60 °C and 80 °C, optionally wherein the phase transfer agent comprises a polar solvent such as an alcohol;
adding further acid to the third mixture to further reduce the pH of the third polar phase of the third mixture to ≤ 2, preferably wherein the acid is added to the third mixture during and/or after a phase transfer step;
isolating the silica gel from the third mixture; and/or
contacting the silica gel with coated and/or uncoated fibres.

12. A process of preparing a silica aerogel, the process comprising drying a silica gel obtained by the process of any one of claims 1 to 11, preferably wherein the silica gel is dried at ambient pressure and temperature of between 25 °C and 300 °C.

13. A process of preparing a silica aerogel according to claim 12, wherein the process comprises preparing the silica gel by the process of any one of claims 1 to 11, and wherein the process comprises:
collecting residual silylating agent during the step of drying the silica gel, and
recycling at least a portion of the collected residual silylating agent so that at least one of the first mixture and the second mixture comprises recycled silylating agent;
optionally wherein the process comprises purifying the collected residual silylating agent prior to recycling.

14. A silica gel obtainable by the process according to any one of claims 1 to 11, or a silica aerogel obtainable by the process according to claim 12 or claim 13, optionally wherein the silica aerogel has one or more of:
an average pore width by nitrogen sorption analysis (d_{pore(N2)}) of from about 2 to about 70 nm, preferably about 5 to about 50 nm;
a pore volume by nitrogen sorption analysis (V_{pore(N2)}) of from about 2 to about 5 cm³/g, preferably about 3.5 to about 5 cm³/g;
a surface area by nitrogen sorption (S_{BET}) of from about 400 to about 900 m²/g, preferably about 550 to about 800 m²/g; and,
a density of from about 0.08 to about 0.25 g/cm³, preferably about 0.1 to about 0.15 g/cm³.

15. An admixture comprising:
i) a silica gel according to claim 14, or a silica aerogel according to claim 14, and
ii) a plurality of fibres;
wherein at least a portion of the silica gel or silica aerogel is physically and/or chemically bonded to at least a portion of the plurality of fibres;
optionally wherein the admixture comprises at least 40 wt% fibres, and at least 5 wt% silica aerogel.

16. An insulation product comprising a silica aerogel according to claim 14, wherein the insulation product is an admixture of the silica aerogel and fibres, an insulation board or an insulation blanket.
